(19) Europäisches Patentamt
European Patent Office
Office européen des brevets

(11) **EP 4 582 326 A1**

(12) **EUROPEAN PATENT APPLICATION**
published in accordance with Art. 153(4) EPC

(43) Date of publication:
**09.07.2025 Bulletin 2025/28**

(21) Application number: **22957344.9**

(22) Date of filing: **30.08.2022**

(51) International Patent Classification (IPC):
**B61K 13/00** (2006.01)  **B61K 9/08** (2006.01)
**B61L 25/04** (2006.01)

(52) Cooperative Patent Classification (CPC):
**B61K 9/08; B61K 13/00; B61L 25/04**

(86) International application number:
**PCT/JP2022/032566**

(87) International publication number:
**WO 2024/047741 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **ITO, Shota**
  **Tokyo 100-8071 (JP)**
• **SHINAGAWA, Daisuke**
  **Tokyo 100-8071 (JP)**
• **SHIMOKAWA, Yoshiyuki**
  **Tokyo 100-8071 (JP)**

(74) Representative: **Vossius & Partner**
**Patentanwälte Rechtsanwälte mbB**
**Siebertstrasse 3**
**81675 München (DE)**

(54) **INFERENCE METHOD, INFERENCE DEVICE, AND INFERENCE PROGRAM**

(57)    An inference device that, based on sensor information measured for some railway vehicle bogies mounted with sensors, infers a state of another railway vehicle bogie not mounted with sensors and having a same condition as the some railway vehicle bogies.

FIG.1

**Description**

Technical Field

Technology disclosed herein relates to an inference method, inference device, and inference program.

Background Art

A method for laying out rail side sensors is known. For example, Japanese Patent Application Laid-Open (JP-A) No. 2016-218053 discloses technology for detecting abnormalities by measuring axle box temperature from the ground. Moreover, JP-A No. 2017-181061 discloses technology for measuring vertical creep force acting at a contact portion between wheel and rail using strain gauges laid out on rails.

SUMMARY OF INVENTION

Technical Problem

Generally various types of sensor, such as strain gauges, acceleration sensors, and the like, are installed to railway vehicle bogies in order to ascertain a railway vehicle bogie state. However, there is a great number of railway vehicle bogies being operated, with an issue arising that the number of sensor installations is a great number when the state of all bogies is to be ascertained.

Moreover, an issue with the method described in the prior art listed above is that only a state at the instant of passing a measurement point is known, and the state of bogies is not known other than when passing measurement points.

In consideration of the above circumstances, technology disclosed herein provides an inference method, an inference device, and an inference program that are capable of suppressing the number of sensors, while inferring a state of plural railway vehicle bogies over the span of an operating period.

Solution to Problem

A first aspect of the present disclosure is an inference method for inferring a state of a railway vehicle, the inference method including, based on sensor information measured for some railway vehicle bogies mounted with sensors, an inference device inferring a state of another railway vehicle bogie not mounted with sensors and having a same condition as the some railway vehicle bogies.

A second aspect of the present disclosure is an inference device for inferring a state of a railway vehicle, the inference device including, based on sensor information measured for some railway vehicle bogies mounted with sensors, inferring a state of another railway vehicle bogie not mounted with sensors and having a same condition as the some railway vehicle bogies.

A third aspect of the present disclosure is an inference program for inferring a state of a railway vehicle, the inference program causing a computer to execute processing including, based on sensor information measured for some railway vehicle bogies mounted with sensors, inferring a state of another railway vehicle bogie not mounted with sensors and having a same condition as the some railway vehicle bogies.

Technology disclosed herein enables a state of plural railway vehicle bogies to be inferred across the span of an operating period while suppressing a number of sensors.

BRIEF DESCRIPTION OF DRAWINGS

Fig. 1 is a schematic diagram illustrating an outline configuration of an inference device according to the present exemplary embodiment.
Fig. 2 is a schematic diagram illustrating an outline configuration of a railway vehicle.
Fig. 3 is a diagram illustrating an example of a configuration of a bogie frame and components peripheral thereto.
Fig. 4 is a block diagram illustrating a configuration of an inference section of an inference device according to the present exemplary embodiment.
Fig. 5 is a schematic block diagram illustrating an example of a computer that functions as an inference device.
Fig. 6 is a diagram illustrating an example of data measured by a railway vehicle measurement device mounted with sensors on plural lines.

Fig. 7 is a diagram illustrating a pattern of travel of a railway vehicle bogie not mounted with sensors on plural lines.

Fig. 8 is a flowchart illustrating an example of inference processing in the present exemplary embodiment.

Fig. 9 is a diagram illustrating an example of acquired data measured on the same line for each railway vehicle bogie.

Fig. 10 is a flowchart illustrating a flow of processing to infer a state of inference processing in the present exemplary embodiment.

Fig. 11 is a flowchart illustrating an example of inference processing in a modified example.

DESCRIPTION OF EMBODIMENTS

Description follows regarding an example of an exemplary embodiment of technology disclosed herein, with reference to the drawings. Note that the same reference numerals will be appended in the drawings to the same or equivalent configuration elements and parts. Moreover, for ease of explanation, sometimes dimensional proportions in the drawings are different to actual proportions.

Summary of Exemplary Embodiments of Technology Disclosed Herein

Measurement of vibration acceleration of axle boxes of one bogie has the same meaning as measuring vibration acceleration of axle boxes of a separate bogie traveling on the same line. Thus in the present exemplary embodiment, vibration acceleration of axle boxes measured for one bogie is appropriated to infer a state of each bogie.

The state (stress, acceleration, or the like) of a bogie is greatly influenced by vibrations of wheels and wheel axels due to uneven track (track displacement) when traveling on a track. The vibration of wheels and wheel axels is the same as the vibration of the axle boxes holding the wheel axels, and the vibration of the axle boxes is transmitted to the bogies through axle box support devices, such as axle springs and the like. Moreover, wheels and wheel axels vibrate in the same manner when traveling on the same line and the same operation conditions irrespective of the type of connected bogie. For cases in which there are plural tracks, due to branching and the like, the line traveled is considered different when the track traveled is different.

This means that a bogie traveling on the same line and the same operation conditions is thought to receive similar axle box vibrations irrespective of the type of bogie. This means that measuring the vibration acceleration of axle boxes using some bogies mounted with sensors for a given line is similar to measuring the vibration acceleration of axle boxes of a bogie not mounted with sensors but travelling on the same line and with the same operation conditions.

Then, the state of bogies traveling on the same line, including bogies not mounted with sensors, is able to be ascertained with few sensors by using models for inferring the state of bogies from axle box vibration accelerations prepared according to bogie type.

Moreover, reference here to operation conditions includes operation conditions related to travel speed indicating travel speed patterns, such as operation as a local train, an express, a limited express, or the like.

Moreover, even for cases in which bogies not mounted with sensors are operated across plural lines and operation conditions, the state of all bogies can be ascertained by combining data of bogies mounted with sensors operated so as to combine lines and operation conditions, and inferring the bogie state therefrom.

Moreover, in the models for inferring bogie state from axle box vibration acceleration, a stress generated on the bogie frame may be inferred, or the vibration acceleration of a motor seat may be inferred, as the bogie state. A method described in JP-A No. 2022-028374 may be employed, for example, as a method to infer stress generated on the bogie frame.

There is no particular limitation to the method for collecting data of sensors for each bogie and, for example, data of sensors for each bogie may be collected by wireless communication. Moreover, there is no particular limitation to the method for collecting line information and operation conditions for each bogie and, for example, the method employed may utilize management of communication spots that use radio frequency identification (RFID) to collect line information of the bogies, or collection of line information and operation conditions of bogies from operation management information of a railway vehicle operator.

Note that an interval to collect data of the sensors of each bogie may be decided to match timewise changes to the track. Namely, when appropriating data of sensors measured by railway vehicle bogies mounted with sensors, the usage data should not show sharp timewise changes on the track side occurring so as to affect the axle box vibration acceleration. A configuration may be adopted in which, for example, data of the sensors of each bogie is collected for weekly segments every month. This thereby enables sensor data to be appropriated for travel timings that are close to each other in a time series.

Inference Device Configuration

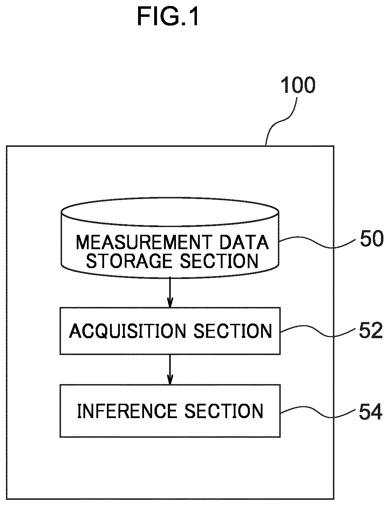

Fig. 1 is a schematic diagram illustrating an outline configuration of an inference device according to an exemplary embodiment of technology disclosed herein. As illustrated in Fig. 1, the inference device 100 according to the present exemplary embodiment is a device for inferring a state of a railway vehicle bogie. The inference device 100 includes a measurement data storage section 50, an acquisition section 52, and an inference section 54. The inference device 100 is not installed on the railway vehicle, and is installed at a separate location.

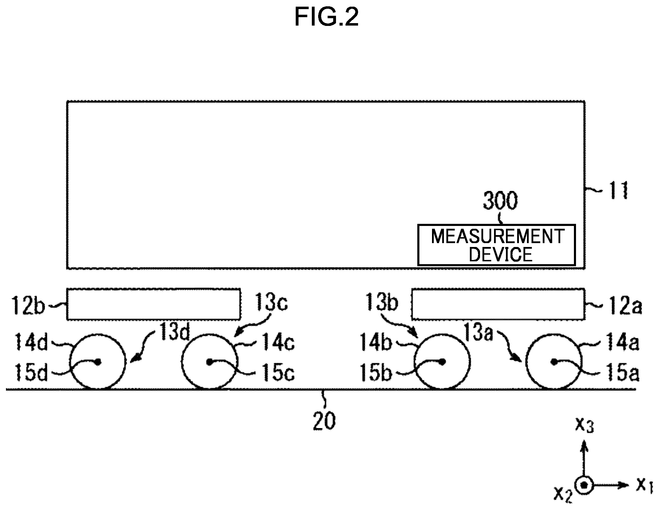

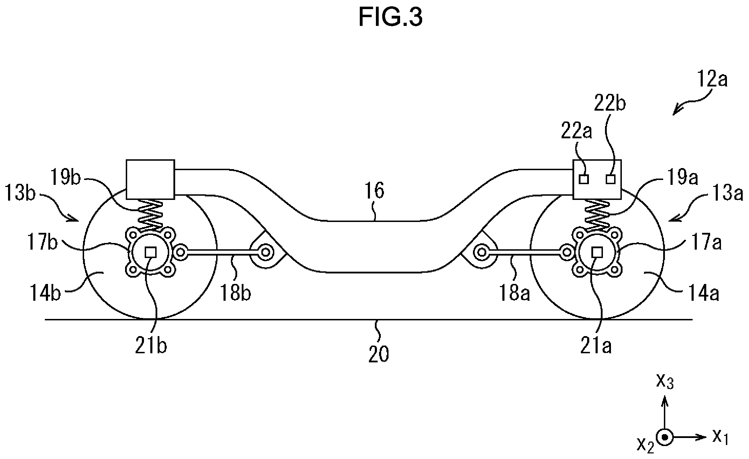

A measurement device illustrated in Fig. 2 is mounted to some of the railway vehicle bogies from out of plural railway vehicles to be applied with the inference device 100 according to the present exemplary embodiment. Fig. 2 is a diagram illustrating an example of a sketch of a railway vehicle. Fig. 3 is a diagram illustrating an example of a configuration of a bogie frame and components peripheral thereto. Note that in Fig. 2 and Fig. 3, the railway vehicle progression direction is a positive $x_1$ axis direction. Namely, the $x_1$ axis is an axis along the direction of travel of the railway vehicle. Moreover, an $x_3$ axis is direction perpendicular to a track 20 (ground) (i.e. is the railway vehicle height direction). The $x_2$ axis is a horizontal direction perpendicular to the railway vehicle travel direction (is a direction perpendicular to both the railway vehicle travel direction and height direction). Note that where there is a dot attached inside a circle in each of the drawings then this indicates a direction out of the page.

In the present exemplary embodiment as illustrated in Fig. 2 and Fig. 3, the railway vehicle includes a car body 11, bogies 12a, 12b, and wheel axles 13a to 13d. Such a present exemplary embodiment will now be described for an example of a railway vehicle including the two bogies 12a, 12b, and the four wheel axle sets 13a to 13d on a single car body 11. The wheel axles 13a to 13d include axles 15a to 15d, and wheels 14a to 14d provided on both ends thereof. In the present exemplary embodiment, the bogies 12a, 12b will be described for an example of a bolsterless bogie.

In Fig. 2, for ease of notation, only one of the wheels 14a to 14d is illustrated for each of the wheel axles 13a to 13d. There are also other wheels arranged on the wheel axles 13a to 13d. There is a total of eight wheels in the example illustrated in Fig. 2.

In Fig. 3, axle boxes 17a, 17b are arranged at both sides along the $x_2$ axis direction of the wheel axles 13a, 13b. The axle boxes 17a, 17b are connected to a bogie frame 16 through monolinks 18a, 18b. The axle boxes 17a, 17b are also connected to the bogie frame 16 through axle springs 19a, 19b. Note that although the railway vehicle also includes configuration elements other than the configuration elements illustrated in Fig. 2 and Fig. 3, for ease of notation and explanation these other configuration elements are omitted from illustration in Fig. 2 and Fig. 3. For example, in Fig. 3, sometimes the railway vehicle includes an axle damper, with the axle boxes 17a, 17b connected to the bogie frame 16 through the axle damper.

In Fig. 3, there is a single bogie frame 16 arranged for a single bogie 12a. The axle boxes 17a, 17b, the monolinks 18a, 18b, and the axle springs 19a, 19b are arranged one for each wheel. As described above, there are four wheels provided to the single bogie 12a. This means that there are four each of axle boxes, monolinks, and axle springs provided for the single bogie 12a. Elements integrated to the bogie frame 16 are considered here as being elements included in the bogie frame 16. For example, an obstruction guard welded to the body of the bogie frame 16 is considered as an element included in the bogie frame 16. Note that there is no defined boundary between the bogie frame 16 and elements integrated to the bogie frame 16. Moreover, elements integrated to the bogie frame 16 undergo the same motions as the bogie frame 16.

Only the bogie frame 16, the axle boxes 17a, 17b, the monolinks 18a, 18b, and the axle springs 19a, 19b of the bogie 12a are illustrated in Fig. 3. A bogie frame, axle boxes, monolinks, and axle springs of the bogie 12b are realized by the same elements as illustrated in Fig. 3. Note that railway vehicle itself can be realized by known technology, and so detailed explanation thereof will be omitted.

In the following description, components coupling the bogie frame 16 and the axle boxes 17a, 17b together will be referred to collectively as coupling elements as appropriate.

The coupling elements are connected to the bogie frame 16 and the axle boxes 17a, 17b. This means that vibrations of the axle boxes 17a, 17b and vibrations of the coupling elements are interlocked. These vibrations propagate to the bogie frame 16 through the coupling elements. External force acting on the bogie frame 16 is represented by the sum of viscous damping force and rigidity force in the coupling element vibration. The viscous damping force is expressed by the product of a viscous damping coefficient and velocity. The rigidity force is expressed by the product of rigidity and displacement. From the above, the present inventors have discovered that the external force acting on the bogie frame 16 can be accurately derived by finding the external force acting on the bogie frame 16 based on acceleration as measured by the connection components (velocity and displacement derived from acceleration). The connection components are components not integrated to the bogie frame 16, and are components connected either directly to the bogie frame 16, or through other components.

Such connection components include, as an example, at least one component from out of a component configuring a coupling element, or a component connected to a coupling element directly or through another component. More specifically, in the present exemplary embodiment an example will be described of a case in which such connection components are the axle boxes 17a, 17b. In the present exemplary embodiment, acceleration sensors 21a, 21b are respectively attached to the axle boxes 17a, 17b. In the present exemplary embodiment, an example will be described of a case in which the acceleration sensors 21a, 21b are tri-axial accelerometers for detecting the vibration acceleration of the

axle boxes. An $x_1$ axis direction component, an $x_2$ axis direction component, and an $x_3$ axis direction component of the acceleration are obtained from the acceleration data measured by the acceleration sensors 21a, 21b. Note that the acceleration sensors are also attached to axle boxes other than the axle boxes 17a, 17b. In the present exemplary embodiment, for example, the acceleration sensors 21a, 21b serve as an example of sensors. Moreover, the acceleration measured by the acceleration sensors 21a, 21b (the acceleration of the axle boxes 17a, 17b) serves as an example of a physical quantity related to an axle box.

By obtaining the external force acting on the bogie frame 16 as described above, and a displacement distribution of the bogie frame 16 (a change amount of position of each part of the bogie frame 16) can be derived by using an equation of motion expressing the vibration (motion) of the bogie frame 16. A stress distribution of the bogie frame 16 is obtained by obtaining the displacement distribution of the bogie frame 16. Moreover, in the present exemplary embodiment, in order to reduce calculation load, a modal analysis method is used to express the equation of motion expressing vibrations of the bogie frame 16. Description follows regarding an example of a method to derive the stress distribution of the bogie frame 16.

In the present exemplary embodiment an example has been described of a case in which the acceleration sensors 21a, 21b, 22a, 22b are employed to detect the acceleration related to the axle boxes, however, there is no limitation thereto. For example, a sensor that detects a physical quantity related to the axle boxes other than acceleration, for example, angular velocity, displacement, or the like, may be employed.

Equation of motion representing the vibrations of the bogie frame 16 are expressed by the following Equation (1).

$$[M]\{\ddot{u}\} + [C]\{\dot{u}\} + [K]\{u\} = \{f\} \qquad \cdots (1)$$

Herein [M] ($\in R^{31 \times 31}$) is a mass matrix of the bogie frame 16, [C] ($\in R^{31 \times 31}$) is a viscosity matrix (also called a damping matrix) of the bogie frame 16, and [K] ($\in R^{31 \times 31}$) is a rigidity matrix of the bogie frame 16.

$\{u\}$ ($\in R^{31}$) is a displacement vector of the bogie frame 16, and $\{f\}$ ($\in R^{31}$) is an external force vector of the bogie frame 16.

In the present exemplary embodiment, vibrations of the bogie frame 16 have three components, in the $x_1$ axis direction, the $x_2$ axis direction, and the $x_3$ axis direction. This means that the displacement of each node configuring $\{u\}$ and the external force at each node configuring $\{f\}$ have three degrees of freedom. Note that in Equation (1), $\cdot$ represents d/dt (a first-order differential with respect to time), $\cdot\cdot$ represents $d^2/dt^2$ (a second-order differential with respect to time) (this also apples to subsequent equations).

I corresponds to the degrees of freedom of an approximate solution to the displacement distribution in numerical analysis. In the present exemplary embodiment, description follows regarding an example of a case in which a finite element method (FEM) is employed for numerical analysis. This means that I is, for example, a number of mesh nodes in a finite element method. In such cases, components of the mass matrix [M] of the bogie frame 16, of the viscosity matrix [C] of the bogie frame 16, and of the rigidity matrix [K] of the bogie frame 16 may be respectively thought of as being values derived from a density corresponding to each component, values derived from a viscous damping coefficient corresponding to each component, and values derived from a rigidity corresponding to each component. The density, viscous damping coefficient, and rigidity may be the same value irrespective of position, or may be different values. The components of the mass matrix [M], the viscosity matrix [C], and the rigidity matrix [K] of the bogie frame 16 are, for example, derived using a known solver for performing numerical analysis with a finite element method, and are derived with a finite element method using a mesh and the density, the viscous damping coefficient, and the rigidity of the bogie frame 16 overall.

The first term on the left of Equation (1) is an inertia term representing gravity acting on the bogie frame 16. The second term on the left of Equation (1) is a damping term representing a viscose force acting on the bogie frame 16. The third term on the left of Equation (1) is a rigidity term representing a rigid force acting on the bogie frame 16.

The external force vector $\{f\}$ of the right hand side of Equation (1) is produced by deriving the external force acting on the coupling elements.

Description follows regarding a method to derive the external force acting on the coupling elements. Connection sites between the bogie frame 16 and the coupling elements may be regions (overall) where the bogie frame 16 and the coupling elements contact each other, and may be representative points (for example, a centroid position) of regions where the bogie frame 16 and the coupling elements contact each other. For example, in order to simplify explanation, the connection sites between the bogie frame 16 and the coupling elements will be taken as being a point. In the following description the connection sites between the bogie frame 16 and the coupling elements are, as applicable, called a point of application of force. For example, the monolink 18a and the axle spring 19a are represented by a model in which a spring and a damper are connected in parallel. The modelled monolink 18a and the bogie frame 16 are connected together by a point of application of force. The modelled axle spring 19a and the bogie frame 16 are connected together by a point of application of force. Moreover, similarly for the axle box 17b, the modelled monolink 18b and the bogie frame 16 are connected together by a point of application of force, and the modelled axle spring 19b and the bogie frame 16 are connected together by a point of application of force.

An equation of motion representing the vibrations of coupling elements is expressed by the following Equation (2).

$$[C_{bc}]\{\dot{u}_0\} + [K_{bc}]\{u_0\} = -\{f_0\} \qquad \cdots (2)$$

Herein $[C_{bc}]$ is a viscosity matrix of a coupling element, $[K_{bc}]$ is a rigidity matrix of a coupling element, $\{u_0\}$ is a displacement vector of a coupling element configured by displacement of a connection site of the coupling element to the axle box 17a and a displacement of a point of application of force of the coupling element, and $\{f_0\}$ is an external force vector of a coupling element configured from an external force at a connection site of the coupling element to the axle box 17a and an external force of a point of application of force of the coupling element. For the components of the viscosity matrix $[C_{bc}]$ of the coupling element and the rigidity matrix $[K_{bc}]$ of the coupling element, these are respectively taken as being values derived from the viscous damping coefficient corresponding to each component, and values derived from the rigidity corresponding to each component. The components of the viscosity matrix $[C_{bc}]$ and the rigidity matrix $[K]$ of the coupling element are, for example, derived using a position of a connection site of the coupling element i to the axle box 17a, a position of a point of application of force of the coupling element, the viscous damping coefficient of the coupling element, and the rigidity of the coupling element.

In Equation (2), the displacements in the $x_1$ axis direction, the $x_2$ axis direction, and the $x_3$ axis direction at the point of application of force are taken as being 0 (zero). Moreover, the displacement at the connection site of the coupling element to the axle box 17a is taken as being the displacement of the axle box 17a. As described above, an external force acting at a point of application of force of a coupling element can be derived as the external force configuring the external force vector $\{f_0\}$ of the coupling element. Namely, external forces acting at the point of application of force of the monolink 18a and at the point of application of force of the axle spring 19a are derived using the Equation (2) configured respectively for the monolink 18a and the axle spring 19a. Moreover, similarly for the axle box 17b, the external forces acting at the point of application of force of the monolink 18b and at the point of application of force of the axle spring 19b are derived from the displacement of the axle box 17b. The external forces acting at each of the points of application of force of the bogie frame 16 are then respectively derived as reaction forces to the external forces acting at the points of application of force of the monolinks 18a, 18b and the points of application of force of the axle springs 19a, 19a.

The values derived by the method stated above are substituted for the components of external force acting at each of the points of application of force (of the bogie frame 16) for external force vector $\{f\}$ of Equation (1), 0 (zero) is substituted for other components, and the displacement distribution of the bogie frame 16 can be derived by deriving the displacement vector $\{u\}$ of the bogie frame 16. In the present exemplary embodiment, an example will be described in which, in order to shorten the calculation time, the equation of motion of a physical coordinate system as expressed by Equation (1) (coordinates expressing a position in actual space) is expressed by an equation of motion based on modal coordinates, and the equation of motion based of a mode coordinate system is employed. Description follows regarding an example of such a method.

A natural frequency $\omega$ and an eigen vector $\{\varphi\}$ are derived by applying eigenvalue analysis to the equation of motion of Equation (1), and a modal matrix $[\varphi]$ $(\in R^{31 \times n})$ configured by eigen vectors $\{\varphi\} = \{\varphi^{(1)}\}, ..., \{\varphi^{(n)}\}$ is derived. Note that the eigen vectors are also called eigenmode vectors. Herein, n (EN) is a mode number. Mode number n natural frequencies are selected in sequence from the lowest natural frequency. The eigenvalue analysis method may, for example, be realized using a modal analysis method described in Non-Patent Document 1 and is known technology, and so detailed explanation thereof will be omitted. Note that when performing eigenvalue analysis, 0 (zero) is used for the right side of Equation (1), as described in the Non-Patent Document 1. Moreover, damping term $[C] \{\dot{u}\}$ may be 0 (zero) ($\dot{u}$ corresponds to · being appended above u in Equation (1)). A displacement vector coordinate system of basis eigen vectors $\{\varphi\} = \{\varphi^{(1)}\}, ..., \{\varphi^{(n)}\}$ is called a mode coordinate system.

A mass matrix $[M_\xi]$ $(\in R^{n \times n})$ of the bogie frame 16 in the mode coordinate system, a viscosity matrix $[C_\xi]$ $(\in R^{n \times n})$ of the bogie frame 16 in the mode coordinate system, and a rigidity matrix $[K_\xi]$ $(\in R^{n \times n})$ of the bogie frame 16 in the mode coordinate system, are respectively expressed by the following Equation (3), Equation (4), and Equation (5).

$$[\phi]^T [M] [\phi] = [M_\xi] \qquad \cdots (3)$$

$$[\phi]^T [C] [\phi] = [C_\xi] \qquad \cdots (4)$$

$$[\phi]^{\mathsf{T}}[K][\phi] = [K_\xi] \qquad \cdots (5)$$

Herein, T indicates a transposition matrix (the same applies in subsequent equations). The mass matrix $[M_\xi]$, the viscosity matrix $[C_\xi]$, and the rigidity matrix $[K_\xi]$ of the bogie frame 16 in the mode coordinate system are respectively diagonal matrices such as the following Equation (6), Equation (7), and Equation (8). Note that in cases in which components other than the diagonal components in the mass matrix $[M_\xi]$ and the viscosity matrix $[C_\xi]$ of the bogie frame 16 in the mode coordinate system are not 0 (zero), then these components are taken as approximating to 0 (zero).

$$[M_\xi] = \begin{bmatrix} m_\xi^{(1)} & 0 & 0 \\ 0 & \ddots & 0 \\ 0 & 0 & m_\xi^{(n)} \end{bmatrix} \qquad \cdots (6)$$

$$[C_\xi] = \begin{bmatrix} c_\xi^{(1)} & 0 & 0 \\ 0 & \ddots & 0 \\ 0 & 0 & c_\xi^{(n)} \end{bmatrix} \qquad \cdots (7)$$

$$[K_\xi] = \begin{bmatrix} k_\xi^{(1)} & 0 & 0 \\ 0 & \ddots & 0 \\ 0 & 0 & k_\xi^{(n)} \end{bmatrix} \qquad \cdots (8)$$

Herein, (1), ..., (n) respectively indicates components corresponding to a first order characteristic vibration mode, ..., $n^{th}$ order characteristic vibration mode (the same applies in subsequent equations).

The mass matrix $[M_\xi]$, the viscosity matrix $[C_\xi]$, and the rigidity matrix $[K_\xi]$ of the bogie frame 16 in the mode coordinate system are diagonal matrices. This accordingly enables each of the characteristic vibration modes to be treated as being independent from each other. This accordingly enables the calculation time to be shortened.

The displacement vectors {u} of the bogie frame 16 in the physical coordinate system are transformed into displacement vectors $\{\xi\}$ ($\in R^n$) in the mode coordinate system as in the following Equation (9). The external force vectors {f} of the bogie frame 16 in the physical coordinate system are transformed into external force vectors $\{f_\xi\}$ ($\in R n$) in the mode coordinate system as in the following Equation (10).

$$\{u\} = [\phi]\{\xi\} \qquad \cdots (9)$$

$$\{f\} = [\phi]\{f_\xi\} \qquad \cdots (10)$$

$[\varphi]T$ is used to multiply both sides of Equation (1) from the left and substituted into Equation (9) and Equation (10). The following Equation (11) is accordingly obtained.

$$[\phi]^{\mathsf{T}}[M][\phi]\{\ddot{\xi}\} + [\phi]^{\mathsf{T}}[C][\phi]\{\dot{\xi}\} + [\phi]^{\mathsf{T}}[K][\phi]\{\xi\} = [\phi]^{\mathsf{T}}[\phi]\{f_\xi\}$$

$$\cdots (11)$$

Herein, $\xi$ · corresponds to · appended above $\xi$ in Equation (11). $\xi$ ·· corresponds to ·· appended above $\xi$ in Equation (11) (the same applies in subsequent equations).

When Equation (3) to Equation (5) are substituted into Equation (11), $[\varphi]T[\varphi]$ is the unitary matrix, and so the following Equation (12) is obtained.

$$[M_\xi]\{\ddot{\xi}\} + [C_\xi]\{\dot{\xi}\} + [K_\xi]\{\xi\} = \{f_\xi\} \qquad \cdot \cdot \cdot (12)$$

As described above, the equation of motion of the physical coordinate system in the Equation (1) can be expressed by the equation of motion of the mode coordinate system as in Equation (12).

Herein, the external force vector $\{f\}$ in Equation (1) derived by the above method needs to be given as the external force vector $\{f_\xi\}$ in the mode coordinate system.

Equation (10) is accordingly rearranged and Equation (13) obtained thereby is used.

$$\{f_\xi\} = [\phi]^T\{f\} \qquad \cdot \cdot \cdot (13)$$

In the present exemplary embodiment, displacement vectors $\{\xi\}(=[\xi^{(1)} \xi^{(2)}...\xi^{(n)}]T)$ of the bogie frame 16 in the mode coordinate system is derived using the equation of motion of Equation (12).

In order to do so, first a modal matrix $[\varphi]$ is derived by eigenvalue analysis. Then the modal matrix $[\varphi]$, and the mass matrix $[M]$, the viscosity matrix $[C]$, and the rigidity matrix $[K]$ of the bogie frame 16, are used to derive a mass matrix $[M_\xi]$, the viscosity matrix $[C_\xi]$, and the rigidity matrix $[K_\xi]$ of the bogie frame 16 in the mode coordinate system using Equation (3) to Equation (5).

Moreover, by performing first-order differentiation and second-order differentiation with respect to time, the displacement vector $\{u_0\}$, velocity vector $\{u_0\cdot\}$ on the left hand side of Equation (2) are respectively derived from the acceleration data measured by the acceleration sensors 21a, 21b. Viscosity matrices $[C_{bc}]$ of the monolinks 18a, 18b and the axle springs 19a, 19b are respectively derived from the viscous damping coefficients of the monolinks 18a, 18b and the axle springs 19a, 19b, and rigidity matrices $[K_{bc}]$ of the monolinks 18a, 18b and the axle springs 19a, 19b are respectively derived from the rigidity of the monolinks 18a, 18b and the axle springs 19a, 19b. Substituting the information obtained in this manner into the Equation (2) derives an external force acting at each of the points of application of force of the monolinks 18a, 18b and the points of application of force of the axle springs 19a, 19b. The external force acting at each of the points of application of force of the bogie frame 16 are respectively derived as reaction force to the external force acting at the points of application of force of the monolinks 18a, 18b and the points of application of force of the axle springs 19a, 19a. The values derived in this manner are substituted for the components of external force acting at each of the points of application of force of the external force vector $\{f\}$ of Equation (13), and other components are substituted with 0 (zero). The modal matrix $[\varphi]$ is substituted for the right hand side of Equation (13). An external force vector $\{f_\xi\}$ of the bogie frame 16 in the mode coordinate system is derived from Equation (13).

The mass matrix $[M_\xi]$, the viscosity matrix $[C_\xi]$, and the rigidity matrix $[K_\xi]$ of the bogie frame 16 in the mode coordinate system derived in this manner are substituted for the external force vector $\{f_\xi\}$ in Equation (12), and this enables the displacement vector $\{\xi\}$ of the bogie frame 16 in the mode coordinate system to be derived by solving Equation (12).

However, in the present exemplary embodiment, in order to raise the inference accuracy of the displacement vector $\{\xi\}$ of the bogie frame 16 in the mode coordinate system, the displacement of the bogie frame 16 in the physical coordinate system is treated as an observation variable and the displacement and velocity of the bogie frame 16 in the mode coordinate system are treated as state variables. Inferred values of unobserved variables (state variables) are then decided so as to achieve a smallest (minimum) difference between the measured values of the observation variables and the values calculated based on Equation (12). Deciding inferred values of the state variables in this manner is realized by performing computation using a filter to perform data assimilation. An example of a filter to perform data assimilation is a linear Kalman filter. In the present exemplary embodiment, description follows regarding an example in which a linear Kalman filter is employed. In a linear Kalman filter, a Kalman gain is found that results in a smallest (minimum) error between the measured values and calculated values of the observation variables, or of the expected values of this error, and values of unobserved variables (state variables) are then found at this point. The linear Kalman filter itself can be realized by known technology.

In order to derive inferred values of the displacement vectors $\{\xi\}$ of the bogie frame 16 in the mode coordinate system in this manner, the acceleration sensors 22a, 22b are attached to the bogie frame 16 in the present exemplary embodiment. The displacement of the attachment positions of the acceleration sensors 22a, 22b (namely, measured values of the observation variables, described later) are derived from the acceleration data measured by the acceleration sensors 22a, 22b by performing second-order differentiation with respect to time. The acceleration sensors 22a, 22b can, for example, be realized by the same sensors as the acceleration sensors 21a, 21b. The acceleration sensors 22a, 22b are attached to specific positions on the bogie frame 16. Fig. 3 illustrates an example of a case in which the number of the acceleration sensors 22a, 22b attached to the bogie frame 16 is two. However, the number of acceleration sensors attached to the bogie frame 16 may be any number of one or more.

Moreover, state variables $\Xi (\in R^{2n})$ are defined according to the following Equation (14). Equation (12) is denoted by following equation of state Equation (15).

$$\Xi = [\dot{\xi}^{(1)} \quad \xi^{(1)} \quad \cdots \quad \dot{\xi}^{(n)} \quad \xi^{(n)}]^T \qquad \cdots (14)$$

$$\dot{\Xi} = A\Xi + GF + W \qquad \cdots (15)$$

Constitutive equations configuring the equation of state of Equation (15) are set out below in Equation (16) and Equation (17).

$$\{\ddot{\xi}\} = -[M_\xi]^{-1}[C_\xi]\{\dot{\xi}\} - [M_\xi]^{-1}[K_\xi]\{\xi\} + [M_\xi]^{-1}\{f_\xi\} \qquad \cdots (16)$$

$$\{\dot{\xi}\} = \{\dot{\xi}\} \qquad \cdots (17)$$

Herein, state transition matrix A $(\in R^{2n \times 2n})$ is expressed by following Equation (18).

$$A = \begin{bmatrix} -\dfrac{c_\xi^{(1)}}{m_\xi^{(1)}} & -\dfrac{k_\xi^{(1)}}{m_\xi^{(1)}} & 0 & 0 & \cdots & 0 & 0 \\ 1 & 0 & 0 & 0 & \cdots & 0 & 0 \\ 0 & 0 & -\dfrac{c_\xi^{(2)}}{m_\xi^{(2)}} & -\dfrac{k_\xi^{(2)}}{m_\xi^{(2)}} & \cdots & 0 & 0 \\ 0 & 0 & 1 & 0 & \cdots & 0 & 0 \\ \vdots & \vdots & \vdots & \vdots & \vdots & \vdots & \vdots \\ 0 & 0 & 0 & 0 & \cdots & -\dfrac{c_\xi^{(n)}}{m_\xi^{(n)}} & -\dfrac{k_\xi^{(n)}}{m_\xi^{(n)}} \\ 0 & 0 & 0 & 0 & \cdots & 1 & 0 \end{bmatrix} \qquad \cdots (18)$$

Moreover, vector F $(\in R^n)$ is a vector stored with external force vectors $\{f_\xi\}$ of the bogie frame 16 in the mode coordinate system, and is expressed by following Equation (19).

$$F = [f_\xi^{(1)} \quad f_\xi^{(2)} \quad \cdots \quad f_\xi^{(n)}]^T \qquad \cdots (19)$$

Moreover, matrix G $(\in R^{2n \times n})$ is expressed by following Equation (20).

$$G = \begin{bmatrix} \dfrac{1}{m_\xi^{(1)}} & 0 & \cdots & 0 \\ 0 & 0 & \cdots & 0 \\ 0 & \dfrac{1}{m_\xi^{(2)}} & \cdots & 0 \\ 0 & 0 & \cdots & 0 \\ \vdots & \vdots & \vdots & \vdots \\ 0 & 0 & \cdots & \dfrac{1}{m_\xi^{(n)}} \\ 0 & 0 & \cdots & 0 \end{bmatrix} \qquad \cdots (20)$$

In Equation (18) to Equation (20), the state variables $\Xi$ are represented by Equation (14), and are obtained by notating Equation (12) in the form of Equation (15). W of Equation (15) represents system noise.

Observation variable $y \in R^{3m}$ is defined as in following Equation (21). $M \in Z$ is the number of observation positions. The observation equation is denoted by the following Equation (22).

$$y = \begin{bmatrix} \tilde{u}_{1,1} & \tilde{u}_{1,2} & \tilde{u}_{1,3} & \cdots & \tilde{u}_{m,1} & \tilde{u}_{m,2} & \tilde{u}_{m,3} \end{bmatrix}^{\mathsf{T}} \qquad \cdots (21)$$

$$y = H\Xi + V \qquad \cdots (22)$$

In the example illustrated in Fig. 3, the number of the acceleration sensors 22a, 22b is two, and the number m of the observation positions is two. ~ indicates a measured amount. Note that the meaning of measured amount encompasses not only amounts that are directly measured, but also amounts derived using other measured amounts.

In Equation (21), a variable j taking the values 1, ..., m preceding the comma (,) in $u\tilde{~}_{1,1}$, $u\tilde{~}_{1,2}$, $u\tilde{~}_{1,3}$, ...$u\tilde{~}_{m,1}$, $u\tilde{~}_{m,2}$, $u\tilde{~}_{m,3}$ represents an observation position (attachment position of the acceleration sensors 22a, 22b in the example illustrated in Fig. 3). Moreover, 1, 2, 3 after the comma (,) in $u\tilde{~}_{1,1}$, $u\tilde{~}_{1,2}$, $u\tilde{~}_{1,3}$, ...$u\tilde{~}_{m,1}$, $u\tilde{~}_{m,2}$, $u\tilde{~}_{m,3}$ respectively represent an $x_1$ axis direction component, an $x_2$ axis direction component, and an $x_3$ axis direction component. This means that, for example, $u\tilde{~}_{1,1}$ represents a measured amount of the $x_1$ axis direction component of displacement at the attachment position of the acceleration sensor corresponding to j = 1.

Note that u~ corresponds to ~ being appended above u in Equation (21) (the same applies in subsequent equations). Moreover, V in Equation (22) represents observational noise.

The observation variable y is accordingly associated with the state variables $\Xi$ by the observation equation represented by Equation (22). Observation matrix H ($\square R^{3m \times 2n}$) is represented by following Equation (23) from Equation (9).

$$H = \begin{bmatrix} 0 & \phi_{1,1}{}^{(1)} & 0 & \phi_{1,1}{}^{(2)} & \cdots & 0 & \phi_{1,1}{}^{(n)} \\ 0 & \phi_{1,2}{}^{(1)} & 0 & \phi_{1,2}{}^{(2)} & \cdots & 0 & \phi_{1,2}{}^{(n)} \\ 0 & \phi_{1,3}{}^{(1)} & 0 & \phi_{1,3}{}^{(2)} & \cdots & 0 & \phi_{1,3}{}^{(n)} \\ \vdots & \vdots & \vdots & \vdots & \vdots & \vdots & \vdots \\ 0 & \phi_{m,1}{}^{(1)} & 0 & \phi_{m,1}{}^{(2)} & \cdots & 0 & \phi_{m,1}{}^{(n)} \\ 0 & \phi_{m,2}{}^{(1)} & 0 & \phi_{m,2}{}^{(2)} & \cdots & 0 & \phi_{m,2}{}^{(n)} \\ 0 & \phi_{m,3}{}^{(1)} & 0 & \phi_{m,3}{}^{(2)} & \cdots & 0 & \phi_{m,3}{}^{(n)} \end{bmatrix} \qquad \cdots (23)$$

In Equation (23), variable j taking the values 1, ..., m proceeding the comma (,) of $\varphi_{1,1}{}^{(1)}$, $\varphi_{1,1}{}^{(2)}$, ..., $\varphi_{1,1}{}^{(n)}$, $\varphi_{1,2}{}^{(1)}$, $\varphi_{1,2}{}^{(2)}$, ..., $\varphi_{1,2}{}^{(n)}$, $\varphi_{1,3}{}^{(1)}$, $\varphi_{1,3}{}^{(2)}$, ..., $\varphi_{1,3}{}^{(n)}$, ..., $\varphi_{m,1}{}^{(1)}$, $\varphi_{m,1}{}^{(2)}$, ..., $\varphi_{m,1}{}^{(n)}$, $\varphi_{m,2}{}^{(1)}$, $\varphi_{m,2}{}^{(2)}$, ..., $\varphi_{m,2}{}^{(n)}$, $\varphi_{m,3}{}^{(1)}$, $\varphi_{m,3}{}^{(2)}$, ..., $\varphi_{m,3}{}^{(n)}$, represents the observation position (the attachment position of the acceleration sensors 22a, 22b in the example illustrated in Fig. 2). 1, 2, 3 after the comma (,) of $\varphi_{1,1}{}^{(1)}$, $\varphi_{1,1}{}^{(2)}$, ..., $\varphi_{1,1}{}^{(n)}$, $\varphi_{1,2}{}^{(1)}$, $\varphi_{1,2}{}^{(2)}$, ..., $\varphi_{1,2}{}^{(n)}$, $\varphi_{1,3}{}^{(1)}$, $\varphi_{1,3}{}^{(2)}$, ..., $\varphi_{1,3}{}^{(n)}$, ..., $\varphi_{m,1}{}^{(1)}$, $\varphi_{m,1}{}^{(2)}$, ..., $\varphi_{m,1}{}^{(n)}$, $\varphi_{m,2}{}^{(1)}$, $\varphi_{m,2}{}^{(2)}$, ..., $\varphi_{m,2}{}^{(n)}$, $\varphi_{m,3}{}^{(1)}$, $\varphi_{m,3}{}^{(2)}$, ..., $\varphi_{m,3}{}^{(n)}$ respectively represent an $x_1$ axis direction component, an $x_2$ axis direction component, and an $x_3$ axis direction component. Thus, for example, $\varphi_{1,1}{}^{(1)}$ is a first-order characteristic vibration mode with an attachment position of the acceleration sensor corresponds to j = 1, of a component of the modal matrix $[\varphi]$ corresponding to the $x_1$ axis direction component.

As illustrated in Equation (14), Equation (22), and Equation (23), from out of state variables $\Xi$, components of the modal matrix $[\varphi]$ are only multiplied by displacements $\xi^{(1)}$, ..., $\xi^{(n)}$ of the bogie frame 16 in the mode coordinate system. Specifically, the components of the modal matrix $[\varphi]$ multiplied by the displacements $\xi^{(1)}$, ..., $\xi^{(n)}$ of the bogie frame 16 in the mode coordinate system are components of a modal matrix $[\varphi]$ having the same number of dimensions as the displacement and characteristic vibration modes of the bogie frame 16 in the mode coordinate system, and are components of a modal matrix $[\varphi]$ corresponding to the same observation position to the observation position where the displacement of the bogie frame 16 occurred in the mode coordinate system.

Inferred values of displacement vector $\{\xi\}$ $(= [\xi^{(1)} \xi^{(2)} ... \xi^{(n)}]^T)$ of the bogie frame 16 in the mode coordinate system are derived by performing computation based on a Kalman filter algorithm using the equation of state represented by Equation (15), the observation equation represented by Equation (22), and measured values of the observation variables derived from the acceleration data measured by the acceleration sensors 22a, 22b. The inferred values of the displacement vector $\{\xi\}$ of the bogie frame 16 in the mode coordinate system are transformed into a displacement vector $\{u\}$ of the bogie frame 16 in the physical coordinate system. For example, a displacement $u_{q,i}$ of the $x_i$ axis direction ($i \in \{1, 2, 3\}$) at a node q of a mesh can be derived as indicated in the following Equation (24).

$$u_{q,i} = \phi_{q,i}^{(1)} \xi^{(1)} + \phi_{q,i}^{(2)} \xi^{(2)} + \cdots + \phi_{q,i}^{(n)} \xi^{(n)} = \sum_{k=1}^{n} \phi_{q,i}^{(k)} \xi^{(k)} \qquad \cdots (24)$$

Herein, $\varphi_{q,i}{}^{(n)}$ is a component of modal matrix $[\varphi]$ corresponding to an $n^{\text{th}}$-order characteristic vibration mode, the mesh node q, and $x_i$ axis direction. As described above, the inferred value of the displacement vector $\{\xi\}$ of the bogie frame 16 in the mode coordinate system is transformed into the displacement vector $\{u\}$ of the bogie frame 16 in the physical coordinate system. A displacement distribution of the bogie frame 16 (displacement at each mesh) is obtained thereby.

Obtaining the displacement distribution of the bogie frame 16 results in each component $\varepsilon_{e,11}$, $\varepsilon_{e,12}$, $\varepsilon_{e,13}$, $\varepsilon_{e,21}$, $\varepsilon_{e,22}$, $\varepsilon_{e,23}$, $\varepsilon_{e,31}$, $\varepsilon_{e,32}$, $\varepsilon_{e,33}$ of a strain tensor at the inside of each element e of the mesh as expressed by the following Equations (25a) to (25f).

$$\varepsilon_{e,11} = \frac{\partial u_{e,1}}{\partial x_1} \qquad \cdots (25a)$$

$$\varepsilon_{e,22} = \frac{\partial u_{e,2}}{\partial x_2} \quad \cdots \quad (25b)$$

$$\varepsilon_{e,33} = \frac{\partial u_{e,3}}{\partial x_3} \quad \cdots \quad (25c)$$

$$\varepsilon_{e,12} = \varepsilon_{e,21} = \frac{1}{2}\left(\frac{\partial u_{e,2}}{\partial x_1} + \frac{\partial u_{e,1}}{\partial x_2}\right) \quad \cdots \quad (25d)$$

$$\varepsilon_{e,13} = \varepsilon_{e,31} = \frac{1}{2}\left(\frac{\partial u_{q,3}}{\partial x_1} + \frac{\partial u_{e,1}}{\partial x_3}\right) \quad \cdots \quad (25e)$$

$$\varepsilon_{e,23} = \varepsilon_{e,32} = \frac{1}{2}\left(\frac{\partial u_{e,3}}{\partial x_2} + \frac{\partial u_{e,2}}{\partial x_3}\right) \quad \cdots \quad (25f)$$

Herein, $x_1, x_2, x_3$ represent coordinate components of displacement denoted in 3 degrees of freedom (in this case the $x_1$ axis direction component, the $x_2$ axis direction component, and the $x_3$ axis direction component). Moreover, $u_{e,1}$, $u_{e,2}$, $u_{e,3}$ represent the $x_1$ axis direction component, the $x_2$ axis direction component, and the $x_3$ axis direction component of the displacements inside each respective element e.

A relationship between stress and strain is represented by the following Equation (26). Note that Equation (26) is called a constitutive law of a resilient body.

$$\begin{bmatrix} \sigma_{e,11} \\ \sigma_{e,22} \\ \sigma_{e,33} \\ \sigma_{e,12} \\ \sigma_{e,23} \\ \sigma_{e,31} \end{bmatrix} = \begin{bmatrix} 2\mu+\lambda & \lambda & \lambda & 0 & 0 & 0 \\ \lambda & 2\mu+\lambda & \lambda & 0 & 0 & 0 \\ \lambda & \lambda & 2\mu+\lambda & 0 & 0 & 0 \\ 0 & 0 & 0 & 2\mu & 0 & 0 \\ 0 & 0 & 0 & 0 & 2\mu & 0 \\ 0 & 0 & 0 & 0 & 0 & 2\mu \end{bmatrix} \begin{bmatrix} \varepsilon_{e,11} \\ \varepsilon_{e,22} \\ \varepsilon_{e,33} \\ \varepsilon_{e,12} \\ \varepsilon_{e,23} \\ \varepsilon_{e,31} \end{bmatrix}$$

$$\cdots \quad (26)$$

1 as it appears as the second lowest digit in 11, 12, 13 of $\sigma_{e,11}$, $\sigma_{e,12}$, $\sigma_{e,13}$ represents stress acting on a minute surface perpendicular to the $x_1$ axis, and 1 as it appears as the second lowest digit in 11, 21, 31 of $\sigma_{e,11}$, $\sigma_{e,21}$, $\sigma_{e,31}$ represents a value of the $x_1$ axis direction component. 2 as it appears as the second lowest digit in 21, 22, 23 of $\sigma_{e,21}$, $\sigma_{e,22}$, $\sigma_{e,23}$ represents stress acting on a minute surface perpendicular to the $x_2$ axis, and 2 as it appears as the lowest digit in 12, 22, 32 of $\sigma_{e,12}$, $\sigma_{e,22}$, $\sigma_{e,32}$ represents a value of the $x_2$ axis direction component. 3 as it appears as the second lowest digit in 31, 32, 33 of $\sigma_{e,31}$, $\sigma_{e,32}$, $\sigma_{e,33}$ represents stress acting on a minute surface perpendicular to the $x_3$ axis, and 3 as it appears as the lowest digit in 13, 23, 33 of $\sigma_{e,13}$, $\sigma_{e,23}$, $\sigma_{e,33}$ is a value of the $x_3$ axis direction component.

$\lambda$, $\mu$ are respectively a Lame constant and a modulus of rigidity. The Lame constant $\lambda$ and the modulus of rigidity $\mu$ are respectively expressed by following Equation (27) and Equation (28).

$$\lambda = \frac{\nu E}{(1+\mu)(1-2\nu)} \qquad \cdots (27)$$

$$\mu = \frac{E}{2(1+\nu)} \qquad \cdots (28)$$

E is the Young's modulus. v is a Poisson ratio.

The stress distribution of the bogie frame 16 (stress at each mesh) is obtained as described above.

The measurement device 300 is placed inside the car body 11 of the railway vehicle. Each time a sampling time of a fixed periodicity arrives, the measurement device 300 acquires data including data indicating an acceleration measured by the acceleration sensors 21a, 21b, 22a, 22b and data indicating a travel position of the railway vehicle. There is no particular limitation to the method for acquiring the data indicating the travel position of the railway vehicle. The data indicating the travel position of the railway vehicle may, for example, be obtained using a global positioning system (GPS) installed to the railway vehicle. A moved distance that has been moved from a measurement start point of the railway vehicle at each time point is derived based on a travel speed of the railway vehicle and an elapsed time from when measurement started, and a travel position of the railway vehicle at each time point may be derived based on this moved distance and the layout of the track 20 the railway vehicle is traveling on. In such cases, data indicating the position of the railway vehicle at the measurement start point is stored in the measurement device 300 prior to start of measurement.

Note that a railway vehicle not mounted with sensors has a similar configuration to the railway vehicle illustrated in Fig. 2 and Fig. 3, except in not being equipped with the measurement device 300 and the acceleration sensors 21a, 21b, 22a, 22b.

The inference device 100 according to the present exemplary embodiment is input by the measurement device 300 with the data, which includes the data indicating the acceleration as measured by the acceleration sensors 21a, 21b, 22a, 22b acquired at a fixed periodicity and data indicating the travel position of the railway vehicle, together with identification information for the railway vehicle. For example, successively acquired data is transmitted by the measurement device 300 to the inference device 100 using a wireless network.

The input data is stored in the measurement data storage section 50. The operation conditions related to the travel line and travel speed of the railway vehicle are stored in the measurement data storage section 50 for each item of railway vehicle identification information. The operation conditions related to travel speed are, for example, conditions related to stations stopped at, and indicate whether the railway vehicle is being a local train, an express, a limited express, or the like.

For a railway vehicle not mounted with sensors serving as the inference target, the acquisition section 52 acquires, from the measurement data storage section 50, data of sensors measured for some railway vehicle bogies mounted with sensors and having the same conditions to the bogies of the inference target railway vehicle.

Specifically, based on the line and operation conditions of the inference target railway vehicle, the acquisition section 52 acquires, from the measurement data storage section 50, data of sensors measured for some railway vehicle bogies mounted with sensors operated on the same line, and having the same operation conditions, to the bogies of the inference target railway vehicle.

Based on the data acquired by the acquisition section 52, the inference section 54 infers a state of the bogies of the inference target railway vehicle using a model for inferring a state of the bogie from the axle box vibration accelerations that has been prepared in advance for bogies of the inference target railway vehicle. For example, a stress generated on the bogies is inferred as a state of the bogies.

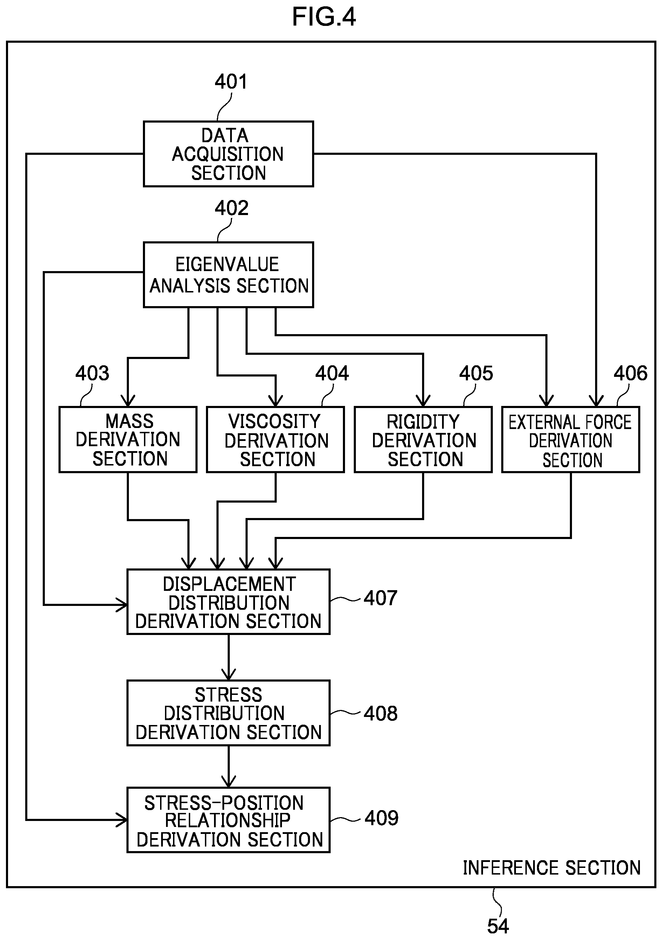

Specifically, as illustrated in Fig. 4, the inference section 54 includes an eigenvalue analysis section 402, a mass derivation section 403, a viscosity derivation section 404, a rigidity derivation section 405, an external force derivation section 406, a displacement distribution derivation section 407, a stress distribution derivation section 408, and a stress-position relationship derivation section 409.

The inference section 54 uses the information obtained at the same sampling time to execute the processing described below at each of the sampling times. For example, in cases in which data acquired for a given sampling time is employed by each section, the data is data acquired by the measurement device 300 at each of the sampling times.

The eigenvalue analysis section 402 performs eigenvalue analysis on the equation of motion of Equation (1) to derive a natural frequency $\omega$ and an eigen vector $\{\varphi\}$, and derives a modal matrix $[\varphi]$ configured by the eigen vector $\{\varphi\}$. Note that the mass matrix $[M]$, the viscosity matrix $[C]$, and the rigidity matrix $[K]$ of the bogie frame 16 are derived based on a formulation of the equation of motion using a finite element method.

The mass derivation section 403 uses the modal matrix $[\varphi]$ and the mass matrix $[M]$ of the bogie frame 16 to derive the mass matrix $[M_\xi]$ of the bogie frame 16 in the mode coordinate system using Equation (3). In the following description, the mass matrix of the bogie frame 16 in the mode coordinate system is, as applicable, called a modal mass matrix.

The viscosity derivation section 404 uses the modal matrix $[\varphi]$ and the viscosity matrix $[C]$ of the bogie frame 16 to derive the viscosity matrix $[C_\xi]$ of the bogie frame 16 in the mode coordinate system from Equation (4). In the following description, the viscosity matrix of the bogie frame 16 in the mode coordinate system is, as applicable, called a modal viscosity matrix.

The rigidity derivation section 405 uses the modal matrix $[\varphi]$ and the rigidity matrix $[K]$ of the bogie frame 16 to derive the rigidity matrix $[K_\xi]$ of the bogie frame 16 in the mode coordinate system from Equation (5). In the following description, the rigidity matrix of the bogie frame 16 in the mode coordinate system is, as applicable, called a modal rigidity matrix.

Based on the acceleration data measured by the acceleration sensors 21a, 21b, the external force derivation section 406 respectively derives a displacement vector $\{u_0\}$ and a velocity vector $\{u_0\cdot\}$ of the monolinks 18a, 18b and the axle springs 19a, 19b. The external force derivation section 406 respectively derives a viscosity matrix $[C_{bc}]$ of the monolinks 18a, 18b and the axle springs 19a, 19b from the viscous damping coefficient of the monolinks 18a, 18b and the axle springs 19a, 19b. The external force derivation section 406 respectively derives a rigidity matrix $[K_{bc}]$ of the monolinks 18a, 18b and the axle springs 19a, 19b from the rigidity of the monolinks 18a, 18b and the axle springs 19a, 19b.

The external force derivation section 406 uses the displacement vector $\{u_0\}$, the velocity vector $\{u_0\cdot\}$, the viscosity matrix $[C_{bc}]$, and the rigidity matrix $[K_{bc}]$ of the monolinks 18a, 18b and the axle springs 19a, 19b to derive an external force acting at points of application of force of the monolinks 18a, 18b and points of application of force of the axle springs 19a, 19b from Equation (2), and derives an external force acting at each of the points of application of force of the bogie frame 16 as the reaction force thereto.

The external force derivation section 406 derives, from out of the components of the external force vector $\{f\}$ of the bogie frame 16, the components of external force acting at each of the points of application of force and derives the external force vector $\{f\}$ of the bogie frame 16 as an external force distribution of the bogie frame 16 by substituting the values derived in this manner, and substituting 0 (zero) for other components. The external force vector $\{f\}$ of the bogie frame 16 derived in this manner and the modal matrix $[\varphi]$ are then employed to derive the external force vector $\{f_\xi\}$ of the bogie frame 16 in the mode coordinate system from Equation (13). Description follows regarding an external force vector of the bogie frame 16 in the mode coordinate system, which is, as applicable, also called a modal external force vector.

The displacement distribution derivation section 407 uses the modal mass matrix $[M_\xi]$, the modal viscosity matrix $[C_\xi]$, the modal rigidity matrix $[K_\xi]$, the modal external force vector $\{f_\xi\}$, the components of the modal matrix $[\varphi]$ corresponding to the attachment positions of the acceleration sensors 21a, 21b, and the accelerations measured by the acceleration sensors 22a, 22b to derive inferred values of the displacement vector $\{\xi\}$ of the bogie frame 16 in the mode coordinate system as a displacement distribution of the bogie frame 16 in the mode coordinate system. In the present exemplary embodiment as described above, the displacement distribution derivation section 407 uses the equation of state as illustrated in Equation (15), the observation equation as illustrated in Equation (22), and the measured values of the observation variables derived from the acceleration data measured by the acceleration sensors 22a, 22b, to derive inferred values of the displacement vector $\{\xi\}$ of the bogie frame 16 in the mode coordinate system by performing computation based on a Kalman filter algorithm. In the following description, a displacement vector of the bogie frame 16 in the mode coordinate system is, as applicable, called a modal displacement vector.

The displacement distribution derivation section 407 uses the inferred value of the modal displacement vector $\{\xi\}$ and the modal matrix $[\varphi]$ to derive a displacement vector $\{u\}$ of the bogie frame 16 in the physical coordinate system from Equation (24) as the displacement distribution of the bogie frame 16 in the physical coordinate system. As described below, the displacement vector of the bogie frame 16 in the physical coordinate system is, as applicable, called an actual displacement vector.

The stress distribution derivation section 408 uses the actual displacement vector $\{u\}$ to derive a strain tensor inside each mesh element e from Equations (25a) to (25f) as a strain distribution of the bogie frame 16. The stress distribution derivation section 408 uses the strain tensor inside each mesh element e, and the Young's modulus E and Poisson ratio v of the bogie frame 16 to derive a stress tensor inside each mesh element e from the Equation (26) to Equation (28) as a stress distribution of the bogie frame 16.

The stress-position relationship derivation section 409 stores the stress distribution of the bogie frame 16 and the railway vehicle travel positions associated with each other. In the following description, the stress distribution of the bogie frame 16 and the railway vehicle travel positions associated with each other in this manner are, as applicable, called stress-position relationship information. The stress-position relationship information is obtained for each of the sampling times as described above.

As described above, based on the data acquired by the acquisition section 52 for each of the sampling times, the inference section 54 uses a model for inferring a state of bogies from vibration acceleration of axle boxes that has been prepared in advance for bogies of the inference target railway vehicles, and infers stress generated in the bogies as a state of the inference target railway vehicle bogies.

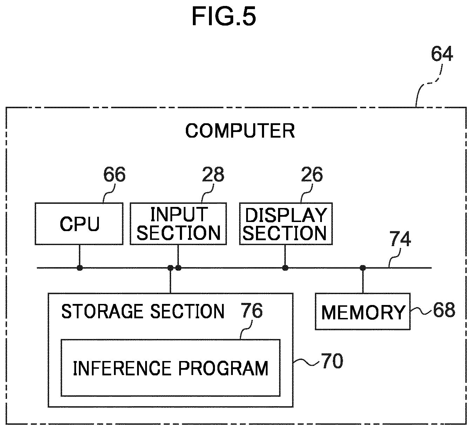

For example, the inference device 100 is implemented by a computer 64 illustrated in Fig. 5. The computer 64 includes a CPU 66, memory 68, a storage section 70 stored with an inference program 76, a display section 26 including a monitor, and an input section 28 including a keyboard and a mouse. The CPU 66, the memory 68, the storage section 70, the display section 26, and the input section 28 are connected to each other by a bus 74.

The storage section 70 is implemented by an HDD, SSD, flash memory, or the like. The inference program 76 that causes the computer 64 to function as the inference device 100 is stored on the storage section 70. The CPU 66 reads the inference program 76 from the storage section 70, and expands and executes the inference program 76 in the memory 68.

Inference device Operation

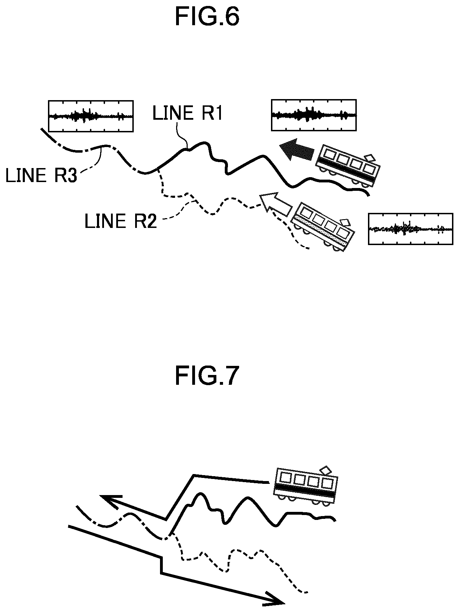

First, as illustrated in Fig. 6, for each of the lines, when the axle box vibration acceleration of some of the railway vehicle mounted with sensors is measured with the measurement device 300, the vibration acceleration is input to the inference device 100, and stored in the measurement data storage section 50. Fig. 6 illustrates an example in which the axle box vibration acceleration is measured by the measurement device 300 for some railway vehicles mounted with sensors on lines R1 to R3.

Moreover, line information and operation conditions of the some railway vehicles mounted with sensors is stored in the measurement data storage section 50.

Moreover, as illustrated in Fig. 7, for each of the lines, when a railway vehicle not mounted with sensors travels, the line information and operation conditions of the railway vehicle not mounted with sensors is also stored in the measurement data storage section 50. Fig. 7 illustrates an example in which a railway vehicle not mounted with sensors travels on lines R1 to R3.

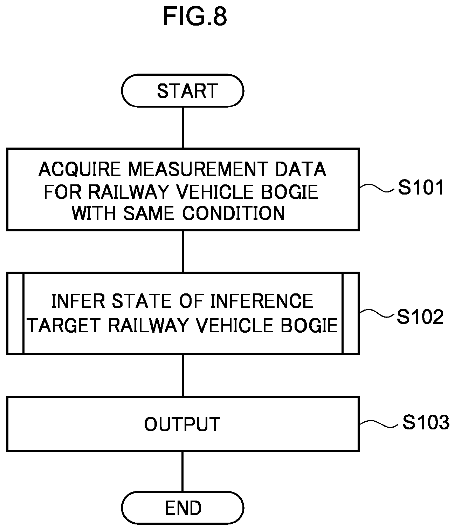

Next, an operator inputs information indicating inference target railway vehicle to the inference device 100, with plural railway vehicle including railway vehicle(s) not mounted with sensors serving as the inference target. Now description follows regarding inference processing executed by the inference device 100 triggered by an operation being performed, such as an instruction to start inference processing or the like, with reference to Fig. 8.

At step S100 of the inference processing, based on the line and operation conditions of the inference target railway vehicles, the acquisition section 52 acquires from the measurement data storage section 50 data of sensors measured for bogies of the some railway vehicles mounted with sensors that were operated on the same line(s) as the inference target railway vehicle bogies and had the same operation conditions.

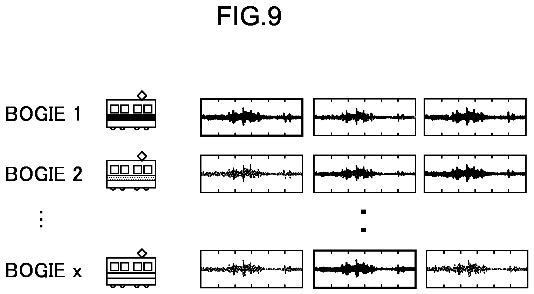

For example, as illustrated in Fig. 9, data of sensors that measured railway vehicle bogies having the same line and operation conditions for each of the railway vehicle bogies is acquired. Fig. 9 illustrates an example of acquiring sensor data measured by railway vehicle bogie on the same line and same operation conditions for each of plural lines for a case in which each of the railway vehicles runs across plural lines.

At step S102, based on the data acquired by the acquisition section 52, the inference section 54 infers a state of the inference target railway vehicle bogies using a model for inferring a bogie state from axle box vibration acceleration pre-prepared for the inference target railway vehicle bogies.

At step S104, the inference section 54 displays inference results from step S102 on the display section 26, and then ends the inference processing.

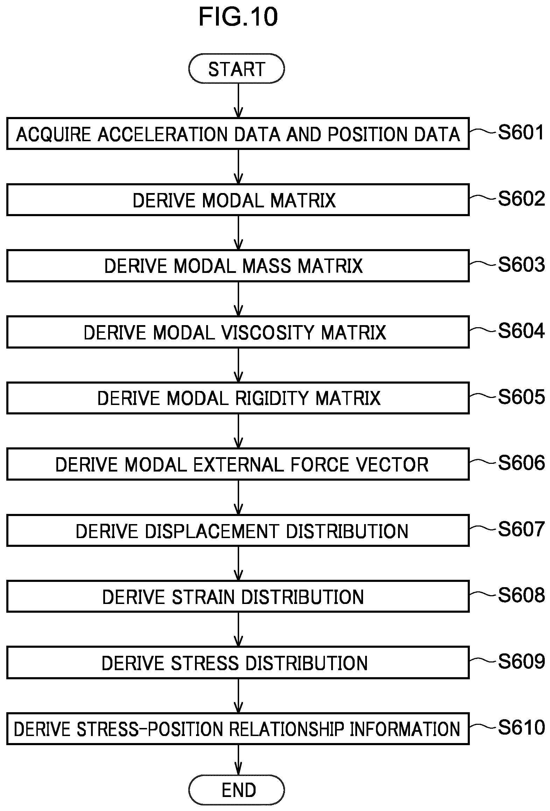

At step S104, the flowchart illustrated in Fig. 10 is implemented. The processing of step S601 to S610 of the flowchart of Fig. 10 is repeatedly executed at each of the sampling times.

First, at step S601, a data acquisition section 401 acquires data including data indicating the acceleration measured by the acceleration sensors 21a, 21b, 22a, 22b, and data indicating the railway vehicle travel positions.

Next, at step S602, the eigenvalue analysis section 402 derives the natural frequency $\omega$ and the eigen vector $\{\varphi\}$ by performing eigenvalue analysis on the equation of motion of Equation (1), and derives the modal matrix $[\varphi]$ configured by the eigen vectors $\{\varphi\}$.

Next, at step S603, the mass derivation section 403 uses the modal matrix $[\varphi]$ and the mass matrix $[M]$ of the bogie frame 16 to derive the modal mass matrix $[M_\xi]$ from Equation (3).

Next, at step S604, the viscosity derivation section 404 uses the modal matrix $[\varphi]$ and the viscosity matrix $[C]$ of the bogie frame 16 to derive the modal viscosity matrix $[C_\xi]$ from in Equation (4).

Next, at step S605, the rigidity derivation section 405 uses the modal matrix $[\varphi]$ and the rigidity matrix $[K]$ of the bogie frame 16 to derive the modal rigidity matrix $[K_\xi]$ from Equation (5).

Next, at step S606, based on the acceleration data measured by the acceleration sensors 21a, 21b, the external force derivation section 406 respectively derives the displacement vector $\{u_0\}$ and the velocity vector $\{u_0\cdot\}$ of the monolinks 18a, 18b and the axle springs 19a, 19b. The external force derivation section 406 uses the displacement vector $\{u_0\}$, the velocity vector $\{u_0\cdot\}$, the viscosity matrix $[C_{bc}]$, and the rigidity matrix $[K_{bc}]$ of the monolinks 18a, 18b and the axle springs 19a, 19b, and the modal matrix $[\varphi]$ to derive a modal external force vector $\{f_\xi\}$ from Equation (2) and Equation (13).

Note that the sequence of step S603 to step S606 is in no particular order.

Next, at step S607, the displacement distribution derivation section 407 uses the modal mass matrix $[M_\xi]$, the

modal viscosity matrix $[C_\xi]$, the modal rigidity matrix $[K_\xi]$, the modal external force vector $\{f_\xi\}$, the components of the modal matrix $[\varphi]$ corresponding to the attachment positions of the acceleration sensors 21a, 21b, and the acceleration measured by the acceleration sensors 22a, 22b to derive inferred values of the modal displacement vector $\{\xi\}$. This is achieved by performing computation with Equation (15) as an equation of state, and Equation (22) as an observation equation and based on a Kalman filter algorithm using the displacement derived from the acceleration measured by the acceleration sensors 22a, 22b as the measured values of the observation variables. The displacement distribution derivation section 407 then uses the inferred values of the modal displacement vector $\{\xi\}$ and the modal matrix $[\varphi]$ to derive an actual displacement vector $\{u\}$ from Equation (24) as displacement distribution of the bogie frame 16.

Next, at step S608, the stress distribution derivation section 408 uses the actual displacement vector $\{u\}$ to derive a strain tensor inside each mesh element e as a strain distribution of the bogie frame 16 from the Equations (25a) to (25f).

Next, at step S609, the stress distribution derivation section 408 uses the strain tensor inside each mesh element e and the Young's modulus E and Poisson ratio v of the bogie frame 16 to derive a stress tensor inside each mesh element e from the Equation (26) to Equation (28) as a stress distribution of the bogie frame 16.

Next, at step S610, the stress-position relationship derivation section 409 associates the stress distribution of the bogie frame 16 and the railway vehicle travel positions with each other, and stores them as stress-position relationship information. The processing of the flowchart of Fig. 10 is then ended.

As described above, based on sensor data measured for some railway vehicle bogies mounted with sensors, the inference device 100 according to the present exemplary embodiment infers a state of other railway vehicle bogies not mounted with sensors but having the same conditions as the some railway vehicle bogies. This enables the number of sensors to be suppressed, and enables a state of plural railway vehicle bogies to be inferred across a span of an operating period.

For example, consider a case in which there are N bogies of railway vehicles not mounted with sensors, and M bogies of railway vehicles mounted with sensors, with both being used on the same line. With conventional technology there would be a need for sensors to be mounted to (N + M) bogies. Namely, in order to ascertain the state of each bogie, there is a need to attach instruments such as sensors or the like to each of the bogies with respect to the inference target bogies. However, in the present exemplary embodiment, the state of the plural railway vehicle bogies can be inferred with a suppressed number of sensors by appropriating data of sensors measured on the M railway vehicle bogies. Suppressing the number of sensors enables the expense of instrumentation and maintenance cost to be suppressed. Moreover, the railway vehicle bogies mounted with sensors may be a minimum of 1 railway vehicle bogie per travel line.

Moreover, for railway vehicle bogies not mounted with sensors, the state of the railway vehicle bogies can be inferred as long as information can be acquired regarding which lines were travelled.

Moreover, in order to infer the state of railway vehicle bogies based on sensor data measured at each sampling time for the some railway vehicle bogies mounted with sensors, the state of railway vehicle bogies can be inferred at a desired interval.

Because the conditions of vibration acceleration generation differ according to the operation conditions, such as being a local train, an express, a limited express, or the like, bogie states can be inferred more accurately by dividing up the data used for inferring bogie state by operation condition.

Note that the inference target railway vehicle may be operated across plural lines and operation conditions. In such cases, for each combination of operation conditions related to line and travel speed, the inference device may infer the state of the inference target railway vehicle bogies not mounted with sensors based on sensor information measured for the some railway vehicle bogies mounted with sensors, which are railway vehicle bogies operated on this line and operated with this operation condition.

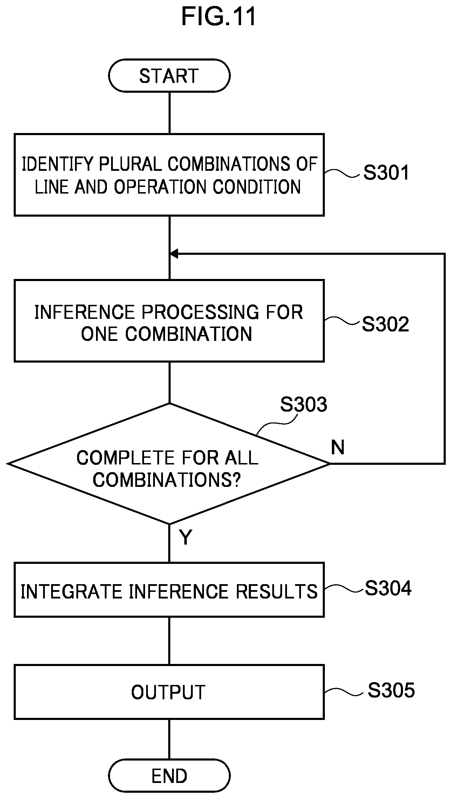

Specifically, the inference processing illustrated in Fig. 11 is executed by the inference device 100.

At step S301 of the inference processing, for each of plural lines, the acquisition section 52 identifies plural combinations of respective line and operation conditions based on the lines and operation condition of the inference target railway vehicle.

At step S302, inference processing is performed for one line and operation condition combination similarly to the inference processing illustrated in Fig. 8.

At step S303, determination is made as to whether or not the processing of step S302 has been performed for the plural combinations identified at step S301. Processing returns to step S302 in cases in which there is still a combination left of line and operation condition for which the processing of step S302 has not yet been performed, and the inference processing is performed for this combination.

Processing proceeds to step S304 in cases in which the processing of step S302 has been performed for the plural combinations identified at step S301.

At step S304, the inference section 54 integrates the inference results of step S302 for the plural combinations, and infers the state of the inference target railway vehicle bogies.

At step S305, the inference section 54 displays the inference result of step S304 using the display section 26, and ends the inference processing.

Moreover, although an example has been described of a case in which the inference device 100 infers stress generated on the bogies as the state of railway vehicle bogies, there is no limitation thereto. For example, a fatigue damage level of the bogies may be inferred as the state of the railway vehicle bogies. In such cases, a model for inferring bogie fatigue damage level from a time series of axle box vibration acceleration may be employed to infer the bogie fatigue damage level.

Moreover, the inference device 100 may be configured so as to present a response plan based on the inference results of the state of railway vehicle bogies. For example, repairing the track of a line travelled by bogies having a high fatigue damage level so as to reduce the bogie fatigue damage level may be presented as such a response plan. Moreover, for bogies having a high fatigue damage level, changing the operation method to extend their life may be presented as such a response plan. Moreover, for bogies having a high fatigue damage level, prioritizing inspection of sites having a high fatigue damage level so as to reduce risk may be presented as such a response plan.

Moreover, although an example has been described of a case in which the sensors mounted to the bogies detect a physical quantity related to the axle boxes, there is no limitation thereto. For example, the sensors mounted to the bogies may detect a physical quantity related to a spring cap. More specifically, the sensors mounted to the bogies may detect an acceleration, angular velocity, or displacement related to a spring cap. Moreover, a physical quantity related to the axle boxes may be inferred from a physical quantity related to the spring cap as detected by the sensors, and the inferred physical quantity related to the axle boxes may be employed to infer a state of the railway vehicle bogies.

Moreover, although an example has been described of a case in which there is a single set of data from sensors mounted to a railway vehicle bogie having the same condition as the inference target railway vehicle, there is no limitation thereto. In cases in which there are plural railway vehicle bogies having the same condition as the inference target railway vehicle, the data of the sensors mounted to the plural bogies may be integrated, and the integrated sensor data employed to infer the state of the inference target railway vehicle bogies. For example, the sensor data may be averaged, or sensor data showing the larger vibration may be employed, and the state of the inference target railway vehicle bogies inferred therefrom.

Moreover, although an example has been described of a case in which the inference device 100 is installed in a location separated from the railway vehicle, there is no limitation thereto. The inference device 100 may be installed in the railway vehicle.

All publications, patent applications and technical standards mentioned in the present specification are incorporated by reference in the present specification to the same extent as if each individual publication, patent application, or technical standard was specifically and individually indicated to be incorporated by reference.

The following supplements are also disclosed in relation to the above exemplary embodiments.

Supplement 1

An inference method for inferring a state of a railway vehicle, the inference method including:

based on sensor information measured for some railway vehicle bogies mounted with sensors,
an inference device inferring a state of another railway vehicle bogie not mounted with sensors and having a same condition as the some railway vehicle bogies.

Supplement 2

The inference method of Supplement 1, wherein the other railway vehicle bogie having the same condition is a railway vehicle bogie operated on a same line as the some railway vehicle bogies.

Supplement 3

The inference method of Supplement 1, wherein:
the other railway vehicle bogie having the same condition is a railway vehicle bogie operated on a same line as, and operated with a same operation condition related to travel speed, as the some railway vehicle bogies.

Supplement 4

The inference method of any one of Supplement 1 to Supplement 3, wherein the sensors detect a physical quantity related to an axle box.

Supplement 5

The inference method of any one of Supplement 1 to Supplement 3, wherein the sensors detect a physical quantity related to a spring cap.

Supplement 6

The inference method of Supplement 5, wherein the inference device uses a physical quantity related to an axle box that has been inferred from the physical quantity related to the spring cap to infer the state of the other railway vehicle bogie.

Supplement 7

The inference method of any one of Supplement 1 to Supplement 6, wherein the inference device infers stress generated in the bogie as the state of the bogie.

Supplement 8

The inference method of any one of Supplement 1 to Supplement 6, wherein the inference device infers a fatigue damage level of the bogie as the state of the bogie.

Supplement 9

The inference method of Supplement 1, wherein:

the sensors detect a physical quantity related to an axle box; and
for each combination of a line and an operation condition related to travel speed, and based on sensor information measured for some railway vehicle bogies mounted with sensors that are railway vehicle bogies operated on the line and operated with the operation condition,
the inference device infers stress generated in the bogie as a state of another railway vehicle bogie not mounted with sensors that is a railway vehicle bogie operated on the line and operated with the operation condition.

Supplement 10

The inference method of Supplement 1, wherein:

the sensors detect a physical quantity related to an axle box; and
for each combination of a line and an operation condition related to travel speed, and based on sensor information measured for some railway vehicle bogies mounted with sensors that are railway vehicle bogies operated on the line and operated with the operation condition,
the inference device infers a fatigue damage level of the bogie as a state of another railway vehicle bogie not mounted with sensors that is a railway vehicle bogie operated on the line and operated with the operation condition.

Supplement 11

The inference method of any one of Supplement 1 to Supplement 10, wherein

when inferring a state of another railway vehicle bogie not mounted with sensors that is railway vehicle bogie operated on plural lines,
the inference device:

infers, for each of the plural lines, the state of the other railway vehicle bogie based on sensor information measured for some railway vehicle bogies mounted with sensors that are railway vehicle bogies operated on the line; and
integrates the state of the other railway vehicle bogie as inferred for/ each of the plural lines.

Supplement 12

An inference device for inferring a state of a railway vehicle, wherein the inference device performs processing including, based on sensor information measured for some railway vehicle bogies mounted with sensors, inferring a state of another railway vehicle bogie not mounted with sensors and having a same condition as the some railway vehicle bogies.

Supplement 13

An inference program for inferring a state of a railway vehicle, the inference program causing a computer to execute processing including, based on sensor information measured for some railway vehicle bogies mounted with sensors,
inferring a state of another railway vehicle bogie not mounted with sensors and having a same condition as the some railway vehicle bogies.

Supplement 14

An inference device for inferring a state of a railway vehicle, the inference device including:

memory, and
at least one processor connected to the memory, wherein:
the processor, based on sensor information measured for some railway vehicle bogies mounted with sensors, infers a state of another railway vehicle bogie not mounted with sensors and having a same condition as the some railway vehicle bogies.

Supplement 15

A non-transitory storage medium stored with a computer executable program configured so as to execute inference processing, wherein:
the inference processing includes, based on sensor information measured for some railway vehicle bogies mounted with sensors, inferring a state of another railway vehicle bogie not mounted with sensors and having a same condition as the some railway vehicle bogies.

**Claims**

1. An inference method for inferring a state of a railway vehicle, the inference method comprising:

based on sensor information measured for some railway vehicle bogies mounted with sensors,
an inference device inferring a state of another railway vehicle bogie not mounted with sensors and having a same condition as the some railway vehicle bogies.

2. The inference method of claim 1, wherein the other railway vehicle bogie having the same condition is a railway vehicle bogie operated on a same line as the some railway vehicle bogies.

3. The inference method of claim 1, wherein:
the other railway vehicle bogie having the same condition is a railway vehicle bogie operated on a same line as, and operated with a same operation condition related to travel speed, as the some railway vehicle bogies.

4. The inference method of claim 1, wherein the sensors detect a physical quantity related to an axle box.

5. The inference method of claim 1, wherein the sensors detect a physical quantity related to a spring cap.

6. The inference method of claim 5, wherein the inference device uses a physical quantity related to an axle box that has been inferred from the physical quantity related to the spring cap to infer the state of the other railway vehicle bogie.

7. The inference method of claim 1, wherein the inference device infers stress generated in the bogie as the state of the bogie.

8. The inference method of claim 1, wherein the inference device infers a fatigue damage level of the bogie as the state of the bogie.

9. The inference method of claim 1, wherein:

   the sensors detect a physical quantity related to an axle box; and
   for each combination of a line and an operation condition related to travel speed, and based on sensor information measured for some railway vehicle bogies mounted with sensors that are railway vehicle bogies operated on the line and operated with the operation condition,
   the inference device infers stress generated in the bogie as a state of another railway vehicle bogie that is not mounted with sensors and that is a railway vehicle bogie operated on the line and operated with the operation condition.

10. The inference method of claim 1, wherein:

    the sensors detect a physical quantity related to an axle box; and
    for each combination of a line and an operation condition related to travel speed, and based on sensor information measured for some railway vehicle bogies mounted with sensors that are railway vehicle bogies operated on the line and operated with the operation condition,
    the inference device infers a fatigue damage level of the bogie as a state of another railway vehicle bogie that is not mounted with sensors and that is a railway vehicle bogie operated on the line and operated with the operation condition.

11. The inference method of any one of claim 1 to claim 10, wherein

    when inferring a state of another railway vehicle bogie that is not mounted with sensors and that is a railway vehicle bogie operated on a plurality of lines,
    the inference device:

       infers, for each of the plurality of lines, the state of the other railway vehicle bogie based on sensor information measured for some railway vehicle bogies mounted with sensors that are railway vehicle bogies operated on the line; and
       integrates the state of the other railway vehicle bogie as inferred for each of the plurality of lines.

12. An inference device for inferring a state of a railway vehicle, wherein the inference device performs processing comprising:
    based on sensor information measured for some railway vehicle bogies mounted with sensors, inferring a state of another railway vehicle bogie not mounted with sensors and having a same condition as the some railway vehicle bogies.

13. An inference program for inferring a state of a railway vehicle, the inference program causing a computer to execute processing comprising:

    based on sensor information measured for some railway vehicle bogies mounted with sensors,
    inferring a state of another railway vehicle bogie not mounted with sensors and having a same condition as the some railway vehicle bogies.

# FIG.1

100

MEASUREMENT DATA
STORAGE SECTION — 50

ACQUISITION SECTION — 52

INFERENCE SECTION — 54

FIG.2

FIG.3

# FIG.4

401

DATA
ACQUISITION
SECTION

402

EIGENVALUE
ANALYSIS SECTION

403 | 404 | 405 | 406

| MASS DERIVATION SECTION | VISCOSITY DERIVATION SECTION | RIGIDITY DERIVATION SECTION | EXTERNAL FORCE DERIVATION SECTION |

DISPLACEMENT
DISTRIBUTION
DERIVATION SECTION ~407

STRESS
DISTRIBUTION
DERIVATION SECTION ~408

STRESS-POSITION
RELATIONSHIP
DERIVATION SECTION ~409

INFERENCE SECTION

54

## FIG.5

64

COMPUTER

66
CPU

28
INPUT SECTION

26
DISPLAY SECTION

74

STORAGE SECTION 76

INFERENCE PROGRAM

70

MEMORY 68

FIG.6

FIG.7

# FIG.8

START

ACQUIRE MEASUREMENT DATA
FOR RAILWAY VEHICLE BOGIE
WITH SAME CONDITION — S101

INFER STATE OF INFERENCE
TARGET RAILWAY VEHICLE BOGIE — S102

OUTPUT — S103

END

FIG.9

BOGIE 1

BOGIE 2

BOGIE x

# FIG.10

START

ACQUIRE ACCELERATION DATA AND POSITION DATA — S601

DERIVE MODAL MATRIX — S602

DERIVE MODAL MASS MATRIX — S603

DERIVE MODAL VISCOSITY MATRIX — S604

DERIVE MODAL RIGIDITY MATRIX — S605

DERIVE MODAL EXTERNAL FORCE VECTOR — S606

DERIVE DISPLACEMENT DISTRIBUTION — S607

DERIVE STRAIN DISTRIBUTION — S608

DERIVE STRESS DISTRIBUTION — S609

DERIVE STRESS-POSITION RELATIONSHIP INFORMATION — S610

END

# FIG.11

START

IDENTIFY PLURAL COMBINATIONS OF LINE AND OPERATION CONDITION — S301

INFERENCE PROCESSING FOR ONE COMBINATION — S302

COMPLETE FOR ALL COMBINATIONS? — S303  N

Y

INTEGRATE INFERENCE RESULTS — S304

OUTPUT — S305

END

## INTERNATIONAL SEARCH REPORT

| International application No. |
| --- |
| **PCT/JP2022/032566** |

**A. CLASSIFICATION OF SUBJECT MATTER**

**B61K 13/00**(2006.01)i; **B61K 9/08**(2006.01)i; **B61L 25/04**(2006.01)i
FI:    B61K13/00 Z; B61K9/08; B61L25/04

According to International Patent Classification (IPC) or to both national classification and IPC

**B. FIELDS SEARCHED**

Minimum documentation searched (classification system followed by classification symbols)

B61K13/00; B61K9/08; B61L25/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2019/229815 A1 (HITACHI, LTD) 05 December 2019 (2019-12-05)<br>paragraphs [0014]-[0067], fig. 1-7 | 1-13 |
| Y | JP 2012-58208 A (RAILWAY TECHNICAL RESEARCH INSTITUTE) 22 March 2012 (2012-03-22)<br>paragraphs [0015]-[0016], fig. 1 | 1-6, 11-13 |
| Y | JP 2011-245917 A (HITACHI, LTD) 08 December 2011 (2011-12-08)<br>paragraphs [0014], [0051], fig. 1 | 5-6, 11 |
| Y | JP 2020-46204 A (MITSUBISHI HEAVY IND ENG CO LTD) 26 March 2020 (2020-03-26)<br>paragraphs [0020]-[0052], fig. 1-7 | 1-3, 7-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

International application No.

**PCT/JP2022/032566**

| Patent document cited in search report | | | Publication date (day/month/year) | Patent family member(s) | Publication date (day/month/year) |
|---|---|---|---|---|---|
| WO | 2019/229815 | A1 | 05 December 2019 | (Family: none) | |
| JP | 2012-58208 | A | 22 March 2012 | (Family: none) | |
| JP | 2011-245917 | A | 08 December 2011 | (Family: none) | |
| JP | 2020-46204 | A | 26 March 2020 | US 2021/0231533 A1 paragraphs [0035]-[0097], fig. 1-7 WO 2020/054579 A1 | |

Form PCT/ISA/210 (patent family annex) (January 2015)

**REFERENCES CITED IN THE DESCRIPTION**

**Patent documents cited in the description**

- JP 2016218053 A
- JP 2017181061 A
- JP 2022028374 A